# EUROPEAN PATENT SPECIFICATION

(11) **EP 3 197 143 B1**
(45) Date of publication and mention of the grant of the patent: **27.03.2019**
(21) Application number: 14898150.9
(22) Date of filing: 14.11.2014
(51) Int. Cl.: H04N 1/327, H04L 12/66

(54) **METHOD AND DEVICE FOR SWITCHING FROM FAX CHANNEL TO VOICE CHANNEL**
VERFAHREN UND VORRICHTUNG ZUM UMSCHALTEN VON EINEM FAXKANAL ZU EINEM SPRACHKANAL
PROCÉDÉ ET DISPOSITIF DE PASSAGE D'UN CANAL DE TÉLÉCOPIE À UN CANAL VOCAL

(30) Priority: 25.07.2014 CN 201410360229
(43) Date of publication of application: 26.07.2017
(73) Proprietor: ZTE Corporation, Shenzhen, Guangdong 518057 (CN)
(72) Inventor: WANG, Yi, Shenzhen Guangdong 518057 (CN); LI, Chenhao, Shenzhen Guangdong 518057 (CN); HUANG, Yaling, Shenzhen Guangdong 518057 (CN)
(74) Representative: AWA Sweden AB
(86) International application number: PCT/CN2014/091173
(87) International publication number: WO 2016/011730

(56) References cited:
- CN-A- 1 109 235
- CN-A- 1 812 357
- CN-A- 101 841 611
- JP-A- 2003 046 672
- US-A1- 2003 193 696
- US-A1- 2013 083 909
- ITU-T: "ITU-T Procedures for real-time Group 3 facsimile communication over IP networks, T.38", , 13 September 2010 (2010-09-13), XP055386916, Retrieved from the Internet: URL:http://www.itu.int/rec/T-REC-T.38-2010 09-S [retrieved on 2017-06-30]

## Description

### Technical Field

The present invention relates to the field of communication, and in particular to a method and apparatus for switching from a fax channel to a voice channel.

### Background

In the next generation network, the fax service is a kind of voice services based on the Voice over Internet Protocol (VoIP) technology. At present, there are mainly two kinds of modes of realizing the fax service through the gateway in the industry: Voice Band Data (VBD) and T.38 mode.

The VBD, that is the transparent transmission mode, through the G.711 voice coding and decoding, it takes the fax data as the common voice for transmission. The advantage of this mode is simply to be realized, and the specific content of the fax data is not required to care about, while only the voice coding and decoding processing is performed. The disadvantage is that the impact of the IP network is relatively large, and the fax data will be lost when the network is unstable, resulting in the failure of the fax.

The T.38 mode means that the fax data sent by the fax machine are demodulated through the T.38 protocol, and they are converted into the message format specified by the protocol for transmission. The advantage of this mode is that the protocol itself enhances the adaptability of the message to the IP network, therefore, the capability of resisting network anomaly is stronger in the transmission process, which greatly improves the success rate of the fax. The disadvantage is more complexly to be realized, but in order to ensure the quality of the fax service, the existing networks use a large number of that mode for fax.

The VBD fax mode just transfers the fax data in the voice channel, and therefore, there is no need for channel switching, while only need to modify the channel configuration after entering the fax service, and it does not do any operation when exiting the fax service. Because the fax channel is the voice channel, after the fax is ended, as long as the fax machine is switched back to the voice mode, the sender and the receiver can make calls directly.

While the T.38 fax mode has the channel switching, that is, it is switched to the T.38 channel at the beginning of the fax service, and it is switched to the voice channel at the end of the fax, to ensure that the sender and the receiver can make calls normally after the fax is ended. At present, in the application of the existing network, the mode of switching to the T.38 channel is already more mature and stable, and the method of switching back to the voice channel generally adopts detecting a fax ending signal DCN and detecting the two-way silence. The traditional mode of switching the T.38 fax back to the voice first adopts detecting the fax ending signal DCN. According to the specification of the protocol, regardless of success or failure of the fax, the fax machine needs to send the DCN signal before switching back to the voice mode. However, in practical application, there are a lot of the manufacturer and model of the fax machines, and there are a lot of fax machines which do not send DCN signal and directly return to the voice mode. Therefore, the traditional switching mode commonly also adopts a second method for redundancy protection, that is, the two-way silence detection. However, in the situation of higher background noise or some extreme test condition, the fax machine itself is already switched to the voice mode, and now the silence detection can not take effect, resulting in a gateway switching failure, and the user can not enter the call status after the fax is ended. At the same time, the duration and threshold of the silence detection is difficult to be set as well. There are some experiences. Sometimes setting different parameters will lead to switching back to the voice during the fax process and the fax failure, and sometimes leads to being unable to switch to the voice normally after the fax is ended. Therefore, the stability of the traditional mode of switching the T.38 fax back to the voice is poor.

Aiming at the problem that the stability of the mode of switching the T.38 fax back to the voice in the related art is poor, there is no effective solution proposed yet.

The document ITU-T: "ITU-T Procedures for real-time Group 3 facsimile communication over IP networks, T.38" discloses the MGs shall autonomously transition from fax to a voice when the MG detects one of the following: detection of bidirectional silence: it is recommended that an MG transition back to voice mode after detecting more than 7s of bidirectional silence. The control channel is a full duplex channel that, unlike the non-ITU-T V.34 fax modes, sends flags in the absence of data.

The document US 2013/0083909 A1 discloses a method for implementing gain control enhancement for modulated communications includes establishing a communication session between a first endpoint and a second endpoint. The communication session involves forwarding a call signal using an initial gain level until a state transition is detected in the communication session at a digital signal processor. The detection may occur in a transmitting gateway associated with the first endpoint or a receiving gateway associated with the second endpoint. The state transition indicates modulated communications, which may include fax, modem, or text telephony.

### Summary

Aiming at the problem that the stability of the mode of switching the T.38 fax back to the voice in the related art is poor, a method and apparatus for switching from a fax channel to a voice channel according to the independent claims are provided. Further improvements and embodiments are provided in the dependent claims.

The scope of the invention is limited by the appended claims. The embodiments, which do not fall within the scope of the claims, are to be interpreted as examples.

Also provided is a method for switching from a fax channel to a voice channel, including: after entering a T.38 fax, counting a first quantity of scheduling periods during which a local end does not demodulate any fax data continuously, and counting a second quantity of scheduling periods during which a remote end does not have any T.38 packet continuously; and judging whether the first quantity and the second quantity both reach a threshold, and switching from a T.38 fax channel to a voice channel when the first quantity and the second quantity both reach the threshold.

In an exemplary embodiment, counting a first quantity of scheduling periods during which a local end does not demodulate any fax data continuously includes: demodulating data at the local end, if no fax data are demodulated in a current scheduling period, then adding a value of the first quantity by 1; otherwise, setting the value of the first quantity as 0.

In an exemplary embodiment, after every scheduling period is ended and before judging whether the first quantity and the second quantity both reach a threshold, the method further includes: detecting whether there is a fax ending signal, and switching from the T.38 fax channel to the voice channel in a situation of detecting that there is the fax ending signal.

In an exemplary embodiment, before judging whether the first quantity and the second quantity both reach a threshold, the method further includes: determining that the first quantity and / or the second quantity is increased after the current scheduling period is ended.

Also provided is an apparatus for switching from a fax channel to a voice channel, including: a first counting module, arranged to: after entering a T.38 fax, count a first quantity of scheduling periods during which a local end does not demodulate any fax data continuously; a second counting module, arranged to: after entering the T.38 fax, count a quantity of scheduling periods during which a remote end does not have any T.38 continuously; a judgment module, arranged to: judge whether the first counter and the second counter both reach a threshold, and trigger a switching module when the first counter and the second counter both reach the threshold; and the switching module, arranged to: switch from a T.38 fax channel to a voice channel.

In an exemplary embodiment, the first counting module is arranged to: count the first quantity of scheduling periods during which the local end does not demodulate any fax data continuously according to the following mode: demodulating data at the local end, if no fax data are demodulated in a current scheduling period, then adding a value of the first quantity by 1; otherwise, setting the value of the first quantity as 0.

In an exemplary embodiment, the apparatus further includes: a determination module, arranged to: determine that the first quantity and / or the second quantity is increased after the current scheduling period is ended, and trigger the judgment module.

In an exemplary embodiment, the apparatus further includes: a detection module, arranged to: detect whether there is a fax ending signal after the scheduling period is over, and trigger the switching module to switch from the T.38 fax channel to the voice channel in a situation of detecting that there is the fax ending signal.

According to the present invention, the quantity of the scheduling periods without fax data after the demodulation of the local end is counted by adopting the mode of demodulating the fax data instead of the traditional silence detection mode, which solves the problem that the stability of mode of switching from the T. 38 fax back to the voice is poor in the related art, improves the success rate and stability of switching from the T.38 fax back to the voice, and ensures the high quality experience of the user to the fax service.

### Brief Description of Drawings

The accompanying drawings described herein are used to provide further understanding for the present invention and constitute a part of the present application. The illustrated embodiments of the present invention and the description thereof are used to explain the present invention, rather than constituting an inappropriate limitation to the present invention. Herein:
FIG. 1 is a structure diagram of a system for switching from a fax channel to a voice channel according to an embodiment of the present invention;
FIG. 2 is a structure diagram of an apparatus for switching from a fax channel to a voice channel according to an embodiment of the present invention;
FIG. 3 is a flow chart of a method for switching from a fax channel to a voice channel according to an embodiment of the present invention;
FIG. 4 is a processing flow chart of embodiment one of the present invention;
FIG. 5 is a processing flow chart of embodiment two of the present invention.

### Detailed Description

The present invention is described in detail with reference to the accompanying drawings and in combination with embodiments hereinafter. It should be illustrated that, in the case of not conflicting, the embodiments in the present application and features in these embodiments can be combined with each other.

In view of the problems existing in the related art, the embodiment of the present invention provides a method for switching working modes of fax channel of the T.38 protocol. Compared with the traditional switching mode, the success rate and stability of switching from the T.38 fax back to the voice is improved, and the high quality experience of the user to the fax service is ensured.

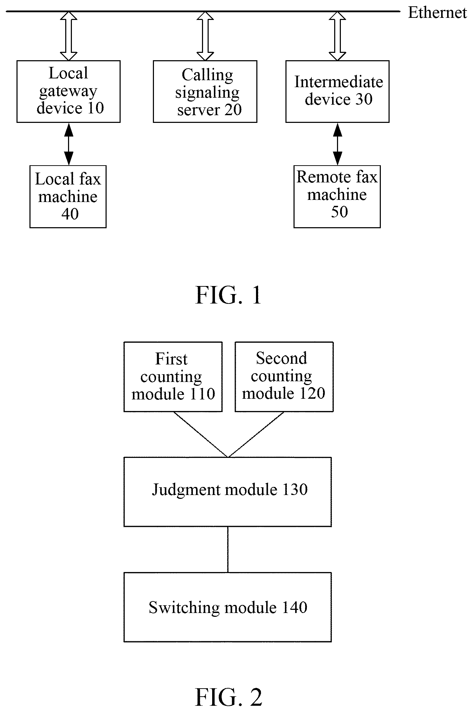

FIG. 1 is a structure diagram of a system for switching from a fax channel to a voice channel according to an embodiment of the present invention. As shown in FIG. 1, the system for switching from a T. 38 fax channel to a voice channel in the embodiment of the present invention includes the setting of a fax between a local fax machine and a remote fax machine, which mainly includes: a local gateway device 10, a signaling server 20, an intermediate device 30, a local fax machine 40 and a remote fax machine 50.

Herein, the fax machine 40 and the remote fax machine 50 can adopt all kinds of current fax machines and can complete the fax function, which is not specifically limited in the present invention.

The local gateway device 10 is an integrated system product taking the gateway as the core, including but not limited to the following: various uplink home gateways and uplink device thereof, relay gateways and user interface devices mounted thereto, access gateways, etc. Herein, the core gateway can directly or indirectly be mounted with the fax machine, and it can be directly or indirectly up-linked to the Ethernet. In the embodiment of the present invention, that type of gateway is mainly adopted. In the specific implementation process, after entering the T.38 fax, the local gateway device 10 counts the quantity of the scheduling periods without fax data continuously after the demodulation of the local end and the quantity of scheduling periods during which the remote end does not have any T.38 packet continuously. It switches from the fax channel to the voice channel when both are greater than the threshold. In particular, the local gateway device 10 may include an apparatus for switching from a T.38 fax channel to a voice channel as shown in FIG. 2.

The calling signaling server 20 is a device for processing a call signaling, including: the sip server and softswitch, etc.

The intermediate device 30 refers to a device mounted to the remote fax machine, and it may also be a similar gateway system and may also be an interface system of a virtual fax machine or a network fax machine, which is not limited in the embodiment of the present invention.

An apparatus for switching from a fax channel to a voice channel is provided according to an embodiment of the present invention.

FIG. 2 is a structure diagram of an apparatus for switching from a fax channel to a voice channel according to an embodiment of the present invention. As shown in FIG. 2, the apparatus mainly includes: a first counting module 110, arranged to: after entering a T.38 fax, count a first quantity of scheduling periods during which a local end does not demodulate any fax data continuously; a second counting module 120, arranged to: after entering the T.38 fax, count a quantity of scheduling periods during which a remote end does not have any T.38 continuously; a judgment module 130, arranged to: judge whether the first counter and the second counter both reach a threshold, and trigger a switching module 140 when the first counter and the second counter both reach the threshold; and the switching module 140, arranged to: switch from a T.38 fax channel to a voice channel.

In an exemplary alternative implementation mode of the embodiment of the present invention, the first counting module can count the first quantity of scheduling periods during which the local end does not demodulate any fax data continuously according to the following mode: demodulating data at the local end, if no fax data are demodulated in a current scheduling period, and then adding a value of the first quantity by 1; otherwise, setting the value of the first quantity as 0.

In an exemplary alternative implementation mode of the embodiment of the present invention, the apparatus may also include: a detection module, arranged to: detect whether there is a fax ending signal after the scheduling period is over, and trigger the switching module to switch from the T.38 fax channel to the voice channel in a situation of detecting that there is the fax ending signal. Thus, the switching time can be further determined to improve the stability of the switching.

In an exemplary alternative implementation mode of the embodiment of the present invention, the apparatus may also include: a determination module, arranged to: determine that the first quantity and / or the second quantity is increased after the current scheduling period is ended, and trigger the judgment module 130. By adopting the method, it is avoided to execute the judgment module 130 in every scheduling period, so that the process can be saved.

According to the embodiment of the present invention, a method for switching from a T.38 fax channel to a voice channel is further provided, which can be realized through the above system and apparatus.

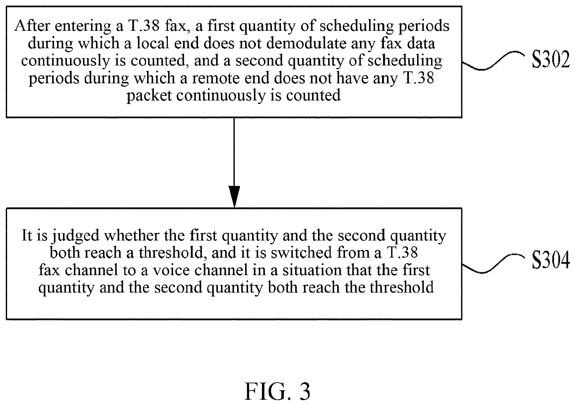

FIG. 3 is a flow chart of a method for switching from a fax channel to a voice channel according to the present invention. As shown in FIG. 3, the method mainly includes the following step S302 to step S304.

In step S302, after entering a T.38 fax, a first quantity of scheduling periods during which a local end does not demodulate any fax data continuously is counted, and a second quantity of scheduling periods during which a remote end does not receive any T.38 packet continuously is counted.

For example, after entering the T.38 fax, the demodulation module of the local end is enabled, to demodulate data at the local end. If no fax data are demodulated in a current scheduling period, then the value of the first quantity is added by 1; otherwise, the value of the first quantity is set as 0.

In the specific implementation process, two counters can be set: a counter A (for counting the first quantity of the scheduling periods during which the local end does not have the fax data after continuous demodulation) and a counter B (for counting the second quantity of scheduling periods during which the remote end does not have any T.38 packet continuously), and a judgment threshold C. After entering the T.38 fax, the demodulation module is enabled; during the demodulation process of the data of the local end, after every scheduling period is over, if there is no fax data in demodulation, then the set counter A is added by 1; during the demodulation process of the data of the remote end, after every scheduling period is over, if there is no T.38 packet at the remote end, then the set counter B is added by 1. If there are fax data at the local end after demodulation, both the counter A and counter B are cleared. If the remote end receives the T.38 packet, the counter A and counter B are also cleared.

In step S304, it is judged whether the first quantity and the second quantity both reach a threshold, and it is switched from a T.38 fax channel to a voice channel when the first quantity and the second quantity both reach the threshold.

In the specific implementation process, if the above counter is used for counting, then during the implementation of the step S304, it is judged whether both the counter A and counter B reach the threshold. If yes, then the switching condition is satisfied, it is switched from the T.38 fax channel back to the voice channel; otherwise, it performs the T.38 fax normally. At the same time, in the process of judging whether the counter reaches the threshold, the DCN signal is detected. If the DCN signal is detected, it is also switched from the T.38 fax back to the voice.

In the specific implementation process, step S304 can be executed after every scheduling period is over, or the step S304 can also be executed after it is determined that the current scheduling period is over and when the first quantity and / or the second quantity is added, which can reduce the number of judgment and improve the efficiency. For example, in the above situation of counting by adopting the counter, the step S304 can be executed after the counter A and/or the counter B is added by 1.

In an exemplary alternative implementation mode of the embodiment of the present invention, after every scheduling period is over and before the step S304 is executed, it can be detected whether there is a fax ending signal (e.g., DCN signal), and it is switched from the T.38 fax channel to the voice channel in the situation that the fax ending signal is detected. That is, it is switched by combining with the method of detecting the fax ending signal DCN. Thus, the success rate and stability of the switching can be guaranteed.

In step S304, if one or both of the first quantity and the second quantity does not reach the threshold, then it is not switched, and the T.38 fax is normally performed.

Through the above method of the embodiment of the present invention, the traditional switching mode is improved, the success rate and stability of switching from the T.38 fax back to the voice is improved, and the high quality experience of the user to the fax service is ensured.

By taking the system in FIG. 1 as the hardware architecture and taking two fax machines already entering the T.38 fax as the premise, the function realization is completed in the local gateway device; and at the same time, those are described by dividing into two embodiments according to the T.38 fax sending and receiving packets. The following specific exemplary embodiments set the environmental conditions as follows: a scheduling period of a gateway system is 10ms; the counter A is used in the T.38 fax transmission flow; and the counter B is used in the T.38 fax reception flow.

### Embodiment one

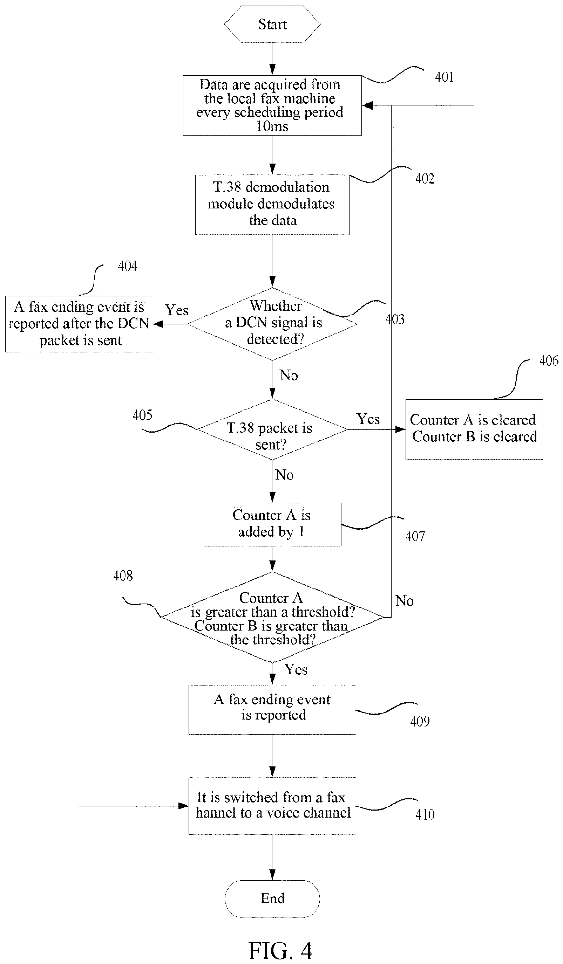

The present embodiment is illustrated by taking the switching process in the process of sending a packet of the T.38 fax as an example. FIG. 4 is a switching and processing flow chart in the present embodiment; as shown in FIG. 4, it mainly includes the following steps.

In step 401, after every scheduling period 10ms of the system is over, data are acquired from the local fax machine.

In step 402, the T.38 demodulation module begins to demodulate the received data, and the data obtained after every demodulation are accumulated, and the data content are judged every time.

In step 403, after the data of this time are demodulated, accumulated and judged, it is determined whether the data are the DCN signal of the fax; if yes, then step 404 is executed; if not, step 405 is executed.

In step 404, after it is determined to be the DCN signal, the signal is packed and sent in accordance with the T.38 protocol, and the service of the fax ending event is reported, and then step 410 is executed according to a command issued by the upper layer service;

In step 405, if it is already determined not to the DCN signal, however, there are also two situations: in one situation, although it is not the DCN signal, it is also a fax signal or fax page data, which is required to send the T.38 packet, and step 406 is executed; in the other situation, it is not the fax information or the cumulative degree is not enough to send the T.38 packet this time, then the step 407 is executed.

In step 406, at this time, it is illustrated that there is still the fax information, both the counter A for a sending packet flow and the counter B for a receiving packet flow are cleared and ready to start recounting, and step 401 is directly executed subsequently.

In step 407, at this time, it is illustrated that there is no fax information at the moment, the counter A for the sending packet flow is required to be added by 1, and step 408 is continued to be executed.

In step 408, after the completion of adding any counter by 1, it is required to perform a threshold judgment for the counter A and the counter B at the same time; if both are greater than the threshold, then step 409 is executed; and if there is one which is not greater than the threshold, then it is returned to step 401.

In step 409, it is illustrated that both the fax sender and receiver do not have fax information for transmission in a fixed period of time, it can be determined that the fax is ended, and the service fax ending event is reported, and then step 410 is executed according to the command issued by the upper layer service.

In step 410, the command of switching from the fax channel to the voice channel is executed, indicating that the T.38 fax is ended, and the call enters a calling state.

### Embodiment two

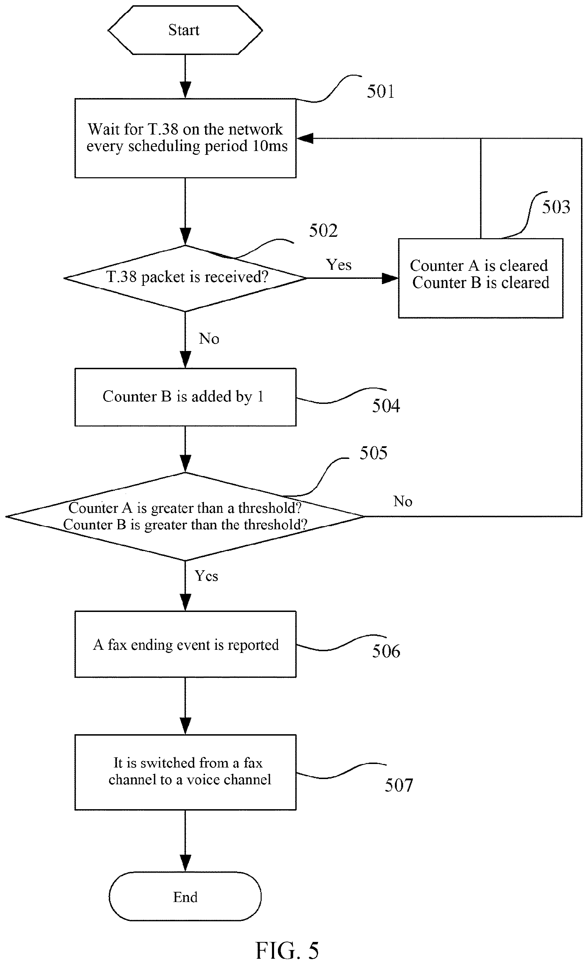

The exemplary embodiment is illustrated by taking the switching process in the process of receiving a packet of the T.38 fax as an example. FIG. 5 is a flow chart of switching processing in the present embodiment; as shown in FIG. 5, it mainly includes the following steps.

In step 501, after every scheduling period 10ms of the system is over, the IP packet on the network is read, and step 2 is executed after an unpacking operation.

In step 502, it is determined whether a T.38 packet sent by a correct remote is received; if yes, step 503 is executed; if no, step 504 is executed.

In step 503, at this time, it is illustrated that the fax information is still in the transmission, the counter A for sending packets and the counter B for receiving packets are cleared and ready to recount, and it is returned to step 501.

In step 504, at this time, it is illustrated that at the current moment no T.38 packet is received from the remote fax machine, the counter B for receiving the packet is required to be added by 1, and the step 505 is executed.

In step 505, after the completion of adding any counter by 1, it is required to perform a threshold judgment for the counter A and the counter B at the same time; if both are greater than the threshold, then step 506 is executed; and if there is one which is not greater than the threshold, then it is returned to step 501.

In step 506, it is illustrated that both the fax sender and receiver do not have fax information for transmission in a fixed period of time, it can be determined that the fax is ended, and the service fax ending event is reported, and then step 507 is executed according to the command issued by the upper layer service.

In step 507, the command of switching from the fax channel to the voice channel is executed, indicating that the T.38 fax is ended, and the call enters a calling state.

Through the illustration of the specific implementation mode, it can be learned that in some special fax application scenarios (the fax machine is unable to report the DCN signal meanwhile the man-made talking test is performed during the fax process or the fax machine is unable to report the DCN signal meanwhile the fax is performed in a high background noise environment); if the fax channel can be switched from the T.38 to the voice channel for calling, then it can be switched by adopting the technical scheme provided by the embodiment of the present invention.

From the above description, it can be seen that, in the embodiment of the present invention, when the data of the local end are demodulated, if no fax data are demodulated during the current scheduling period, then the counter for recording the quantity of scheduling periods during which the local end does not demodulate any fax data continuously is added by 1; if the fax data are demodulated, then the counter for recording the quantity of scheduling periods during which the local end does not demodulate any fax data continuously is cleared. After the scheduling period is over, it is judged whether to switch from the T.38 fax channel to the voice channel according to the value of that counter and the quantity of scheduling periods during which the remote end does not have any T.38 packet continuously, instead of the traditional silence detection method, to solve the problem that the stability of the mode of switching the T.38 fax back to the voice in the related art is poor, improve the success rate and stability of switching the T.38 fax back to the voice, and ensure the high quality experience of the user to the fax service.

Apparently, it can be understood by those skilled in the art that each module or each step above-mentioned in the present invention can be implemented by the universal calculating apparatus, and they can be integrated in a single calculating apparatus, or distributed in the network made up by a plurality of calculating apparatus. In an exemplary embodiment, they can be implemented by the executable program codes of the calculating apparatus. Accordingly, they can be stored in the storage apparatus and implemented by the calculating apparatus, and in some situations, the shown or described steps can be executed according to a sequence different from described herein, or they are made into various integrated circuit modules respectively, or a plurality of modules or steps therein are made into the single integrated circuit module to be implemented. In this way, the present invention is not limited to any specific form of the combination of the hardware and software.

The above description is only the preferred embodiments of the present invention and it is not intended to limit the present invention. For those skilled in the art, the present invention can have various modifications and variations.

### Industrial Applicability

Based on the technical scheme provided by the present invention, the quantity of the scheduling periods without fax data after the demodulation of the local end is counted by adopting the mode of demodulating the fax data, instead of the traditional silence detection mode, which solves the problem that the stability of mode of switching from the T. 38 fax back to the voice is poor in the related art, improves the success rate and stability of switching from the T.38 fax back to the voice, and ensures the high quality experience of the user to the fax service.

## Claims

1. A method for switching from a fax channel to a voice channel, comprising:
after entering a T.38 fax channel, counting (S302) a first quantity of scheduling periods during which data demodulated by a local end is not fax data continuously, and counting (S302) a second quantity of scheduling periods during which the local end does not receive any T.38 packet sent by a remote end continuously; and
judging (S304) whether the first quantity and the second quantity both reach a threshold, and switching (S304) from the T.38 fax channel to a voice channel in a situation that the first quantity and the second quantity both reach the threshold.

2. The method according to claim 1, wherein, counting a first quantity of scheduling periods during which data demodulated by a local end is not fax data continuously comprises: demodulating data at the local end, if the data demodulated by the local end is not fax data in a current scheduling period, then adding a value of the first quantity by 1; otherwise, setting the value of the first quantity as 0.

3. The method according to claim 1, after every scheduling period is ended and before judging whether the first quantity and the second quantity both reach a threshold, further comprising:
detecting whether there is a fax ending signal, and switching from the T.38 fax channel to the voice channel in a situation of detecting that there is the fax ending signal.

4. The method according to any one of claims 1 to 3, before judging whether the first quantity and the second quantity both reach a threshold, further comprising: determining that the first quantity and / or the second quantity is increased after the current scheduling period is ended.

5. An apparatus for switching from a fax channel to a voice channel, comprising:
a first counting module (110), arranged to: after entering a T.38 fax channel, count a first quantity of scheduling periods during which data demodulated by a local end is not fax data continuously;
a second counting module (120), arranged to: after entering the T.38 fax channel, count a quantity of scheduling periods during which the local end does not receive any T.38 packet sent by a remote end continuously;
a judgment module (130), arranged to: judge whether the first counter and the second counter both reach a threshold, and trigger a switching module in a situation that the first counter and the second counter both reach the threshold; and
the switching module (140), arranged to: switch from a T.38 fax channel to a voice channel.

6. The apparatus according to claim 5, wherein, the first counting module (110) is arranged to: count the first quantity of scheduling periods during which data demodulated by the local end is not fax data continuously according to the following mode: demodulating data at the local end, if the data demodulated by the local end is not fax data in a current scheduling period, and then adding a value of the first quantity by 1; otherwise, setting the value of the first quantity as 0.

7. The apparatus according to claim 5, further comprising: a determination module, arranged to: determine that the first quantity and / or the second quantity is increased after a current scheduling period is ended, and trigger the judgment module.

8. The apparatus according to any one of claims 5 to 7, further comprising:
a detection module, arranged to: detect whether there is a fax ending signal after the scheduling period is over, and trigger the switching module to switch from the T.38 fax channel to the voice channel in a situation of detecting that there is the fax ending signal.

## Patentansprüche

1. Verfahren zum Umschalten eines Faxkanals zu einem Sprachkanal, das Folgendes umfasst:
nach dem Eintreten in einen T.38-Faxkanal, kontinuierliches Zählen (S302) einer ersten Anzahl von Disponierungszeiträumen, während denen Daten, die durch ein lokales Ende demoduliert werden, keine Fax-Daten sind, und kontinuierliches Zählen (S302) einer zweiten Anzahl von Disponierungszeiträumen, während denen das lokale Ende kein T.38-Paket empfängt, das durch ein räumlich abgesetztes Ende gesendet wurde; und
Beurteilen (S304), ob die erste Anzahl und die zweite Anzahl beide eine Schwelle erreichen, und Umschalten (S304) von dem T.38-Faxkanal auf einen Sprachkanal in einer Situation, in der die erste Anzahl und die zweite Anzahl beide die Schwelle erreichen.

2. Verfahren nach Anspruch 1, wobei das kontinuierliche Zählen einer ersten Anzahl von Disponierungszeiträumen, während denen Daten, die durch ein lokales Ende demoduliert werden, keine Fax-Daten sind, umfasst: Demodulieren von Daten an dem lokalen Ende, wenn die durch das lokale Ende demodulierten Daten keine Fax-Daten sind, in einem momentanen Disponierungszeitraum, und anschließendes Addieren eines Wert der ersten Anzahl um 1; anderenfalls Einstellen des Wertes der ersten Anzahl als 0.

3. Verfahren nach Anspruch 1, das, nachdem jeder Disponierungszeitraum beendet ist und vor dem Beurteilen, ob die erste Anzahl und die zweite Anzahl beide eine Schwelle erreichen, des Weiteren Folgendes umfasst:
Detektieren, ob es ein Fax-Ende-Signal gibt, und Umschalten von dem T.38-Faxkanal zu dem Sprachkanal in einer Situation, in der detektiert wird, dass es das Fax-Ende-Signal gibt.

4. Verfahren nach einem der Ansprüche 1 bis 3, das vor dem Beurteilen, ob die erste Anzahl und die zweite Anzahl beide eine Schwelle erreichen, des Weiteren Folgendes umfasst:
Bestimmen, dass die erste Anzahl und/oder die zweite Anzahl erhöht wurden, nachdem der momentane Disponierungszeitraum beendet ist.

5. Vorrichtung zum Umschalten eines Faxkanals zu einem Sprachkanal, die Folgendes umfasst:
ein erstes Zählmodul (110), das für Folgendes ausgelegt ist: nach dem Eintreten in einen T.38-Faxkanal, kontinuierliches Zählen einer ersten Anzahl von Disponierungszeiträumen, während denen Daten, die durch ein lokales Ende demoduliert werden, keine Fax-Daten sind;
ein zweites Zählmodul (120), das für Folgendes ausgelegt ist: nach dem Eintreten in die T.38-Faxkanal, kontinuierliches Zählen einer Anzahl von Disponierungszeiträumen, während denen das lokale Ende kein T.38-Paket empfängt, das durch ein räumlich abgesetztes Ende gesendet wurde;
ein Beurteilungsmodul (130), das für Folgendes ausgelegt ist: Beurteilen, ob der erste Zähler und der zweite Zähler beide eine Schwelle erreichen, und Auslösen eines Umschaltmoduls in einer Situation, in der der erste Zähler und der zweite Zähler beide die Schwelle erreichen; und
wobei das Umschaltmodul (140) für Folgendes ausgelegt ist: Umschalten eines T.38-Faxkanals zu einem Sprachkanal.

6. Vorrichtung nach Anspruch 5, wobei das erste Zählmodul (110) für Folgendes ausgelegt ist: kontinuierliches Zählen der ersten Anzahl von Disponierungszeiträumen, während denen durch das lokale Ende demodulierte Daten keine Fax-Daten sind, nach folgendem Modus: Demodulieren von Daten an dem lokalen Ende, wenn die durch das lokale Ende demodulierten Daten keine Fax-Daten sind, in einem momentanen Disponierungszeitraum, und dann Addieren eines Wertes der ersten Anzahl um 1; anderenfalls Einstellen des Wertes der ersten Anzahl als 0.

7. Vorrichtung nach Anspruch 5, die des Weiteren ein Bestimmungsmodul umfasst, das für Folgendes ausgelegt ist: Bestimmen, dass die erste Anzahl und/oder die zweite Anzahl erhöht wurde, nachdem ein momentaner Disponierungszeitraum beendet ist, und Auslösen des Beurteilungsmoduls.

8. Vorrichtung nach einem der Ansprüche 5 bis 7, die des Weiteren umfasst:
ein Detektionsmodul, das für Folgendes ausgelegt ist: Detektieren, ob es ein Fax-Ende-Signal gibt, nachdem der Disponierungszeitraum vorüber ist, und Auslösen des Umschaltmoduls, um von dem T.38-Faxkanal zu dem Sprachkanal umzuschalten, in einer Situation, in der detektiert wird, dass es das Fax-Ende-Signal gibt.

## Revendications

1. Procédé de commutation d'un canal de télécopie à un canal vocal, comprenant :
après l'entrée dans un canal de télécopie T.38, le comptage (S302) continuellement d'une première quantité de périodes de programmation au cours desquelles des données démodulées par une extrémité locale ne sont pas des données de télécopie, et le comptage (S302) continuellement d'une deuxième quantité de périodes de programmation au cours desquelles l'extrémité locale ne reçoit pas de paquet T.38 envoyé par une extrémité distante ; et
le jugement (S304) si la première quantité et la deuxième quantité atteignent toutes les deux un seuil, et la commutation (S304) du canal de télécopie T.38 à un canal vocal dans une situation dans laquelle la première quantité et la deuxième quantité atteignent toutes les deux le seuil.

2. Procédé selon la revendication 1, dans lequel le comptage continuellement d'une première quantité de périodes de programmation au cours desquelles des données démodulées par une extrémité locale ne sont pas des données de télécopie comprend : la démodulation de données à l'extrémité locale ; si les données démodulées par l'extrémité locale ne sont pas des données de télécopie au cours d'une période de programmation actuelle, alors l'ajout de 1 à une valeur de la première quantité ; sinon, le réglage de la valeur de la première quantité à 0.

3. Procédé selon la revendication 1, après que chaque période de programmation est terminée et avant de juger si la première quantité et la deuxième quantité atteignent toutes les deux un seuil, comprenant en outre :
la détection s'il y a un signal de fin de télécopie et la commutation du canal de télécopie T.38 au canal vocal dans une situation de détection qu'il y a le signal de fin de télécopie.

4. Procédé selon l'une quelconque des revendications 1 à 3, avant le jugement si la première quantité et la deuxième quantité atteignent toutes les deux un seuil, comprenant en outre : la détermination que la première quantité et/ou la deuxième quantité sont augmentées après la fin de la période de programmation actuelle.

5. Appareil de commutation d'un canal de télécopie à un canal vocal, comprenant :
un premier module de comptage (110) agencé pour : après l'entrée dans un canal de télécopie T.38, le comptage continuellement d'une première quantité de périodes de programmation au cours desquelles des données démodulées par une extrémité locale ne sont pas des données de télécopie ;
un deuxième module de comptage (120) agencé pour : après l'entrée dans le canal de télécopie T.38, le comptage continuellement d'une quantité de périodes de programmation au cours desquelles l'extrémité locale ne reçoit pas de paquet T.38 envoyé par une extrémité distante ;
un module de jugement (130) agencé pour : le jugement si le premier compteur et le deuxième compteur atteignent tous les deux un seuil, et le déclenchement d'un module de commutation dans une situation dans laquelle le premier compteur et le deuxième compteur atteignent tous les deux le seuil ; et
le module de commutation (140) agencé pour : la commutation d'un canal de télécopie T.38 à un canal vocal.

6. Appareil selon la revendication 5, dans lequel le premier module de comptage (110) est agencé pour : le comptage continuellement de la première quantité de périodes de programmation au cours desquelles des données démodulées par l'extrémité locale ne sont pas des données de télécopie selon le mode suivant : la démodulation de données à l'extrémité locale ; si les données démodulées par l'extrémité locale ne sont pas des données de télécopie au cours d'une période de programmation actuelle, alors l'ajout de 1 à une valeur de la première quantité ; sinon, le réglage de la valeur de la première quantité à 0.

7. Appareil selon la revendication 5, comprenant en outre : un module de détermination agencé pour : la détermination que la première quantité et/ou la deuxième quantité sont augmentées après qu'une période de programmation actuelle est terminée, et le déclenchement du module de jugement.

8. Appareil selon l'une quelconque des revendications 5 à 7, comprenant en outre :
un module de détection agencé pour : la détection s'il y a un signal de fin de télécopie après que la période de programmation est terminée, et le déclenchement du module de commutation pour la commutation du canal de télécopie T.38 au canal vocal dans une situation de détection qu'il y a le signal de fin de télécopie.
